# EUROPEAN PATENT SPECIFICATION

(11) **EP 3 004 738 B1**
(45) Date of publication and mention of the grant of the patent: **17.05.2017**
(21) Application number: 14733352.0
(22) Date of filing: 27.05.2014
(51) Int. Cl.: F23G 5/00, F23G 5/027, F23G 5/04, F23G 5/46, F23G 7/10

(54) **PRODUCTION PLANT OF THERMAL ENERGY AND/OR ELECTRICITY FROM BIOMASS**
PRODUKTIONSANLAGE FÜR WÄRMEENERGIE UND/ODER ELEKTRIZITÄT AUS BIOMASSE
USINE DE PRODUCTION D'ÉNERGIE THERMIQUE ET/OU D'ÉLECTRICITÉ À PARTIR DE BIOMASSE

(30) Priority: 05.06.2013 IT MI20130919
(43) Date of publication of application: 13.04.2016
(73) Proprietor: Greentek di Salomoni Marco & C. S.N.C., 25030 Roncadelle (BS) (IT)
(72) Inventor: SALOMONI, Marco, I-25030 Roncadelle (BS) (IT)
(74) Representative: Gatti, Enrico
(86) International application number: PCT/IB2014/061745
(87) International publication number: WO 2014/195825

(56) References cited:
- DE-A1- 4 037 743
- US-A1- 2003 177 963
- US-A1- 2006 144 304
- US-A1- 2008 223 268
- US-A1- 2010 058 960
- US-B1- 6 213 030
- US-B1- 6 453 829

## Description

The present invention concerns a plant for the production of thermal energy from biomass fed to the plant in the form of pellets, it being possible to complete the plant with equipment that allows all or part of the thermal energy produced to be transformed into electricity.

As known by persons skilled in the art, the term biomass indicates any organic substance originating directly or indirectly from photosynthesis, which can be used as fuel for the production of energy.

Biomass constitutes a source of clean renewable energy, is widely available, constitutes a local energy resource with low environmental impact and, if managed correctly, will not run out.

Cogeneration plants which utilise the direct combustion of biomass which would otherwise be normally sent for disposal as waste or for spreading on the fields are already in use. These plants allow the production of hot water and/or hot air for heating and/or electricity.

In particular the biomass that can be used in cogeneration plants consists of:
1. wood-cellulose residues and by-products (clippings, loppings and prunings), residues originating from woodworking (bark, sawdust, chippings) and agri-food residues (straw, fruit shells and stones);
2. sugar crops (in particular beet);
3. woody-cellulose crops (such as fibre sorghum, ordinary cane, poplar and eucalyptus);
4. starch crops (such as cereals, maize and potatoes) and oily crops;
5. organic fractions (wet and dry) of municipal and industrial waste;
6. waste from livestock farms and agri-food industries.

It should be remembered that the carbon dioxide produced by the combustion of biomass in cogeneration plants almost balances the carbon dioxide emitted into the atmosphere. In fact, the carbon dioxide emitted is the same as that fixed by plants or consumed by animals indirectly via plants, contrary to what happens for the carbon dioxide emitted from scratch by the combustion of fossil fuels, therefore it does not contribute to the greenhouse effect.

It should also be remembered that when biomass is used as a substitute for coal or fuel oil, its low content of sulphur and other pollutants helps to alleviate the phenomenon of acid rain.

The only drawback of cogeneration plants powered by biomass is that they emit dust into the atmosphere.

The biomass considered here is solid biomass, which comes under the EU Directive 2001/77.

The combustion of biomass generates heat and oxidised gaseous compounds. The heat developed is recovered to produce steam, then used for the production of electricity or for remote heating. However, the thermo-chemical process of combustion also produces ash and dust, and consequently there is the problem of disposal of the ash and treatment of the fumes produced.

The plants in question comprise a combustion chamber in which the biomass is burnt, normally with the aid of methane gas or diesel, which serve to raise the combustion temperature.

In these plants, before direct combustion of the biomass, there are various preparatory phases, in particular:
- abatement of the humidity percentage;
- preparation of the composting and purification;
- reduction of the biomass to suitable dimensions;
- drying.

Each of these preparatory phases is currently performed in respective specific equipment which manages each phase separately and is designed and produced for large-size plants.

The same applies to the phases after combustion, i.e.:
- management of cogeneration;
- management of combustion waste;
- management of atmospheric emissions.

These phases are also performed in respective specific and distinct equipment suitable for large-size plants.

Pyrolysis or pyrogenation of the biomass is another known technique, i.e. thermochemical decomposition of the organic materials obtained by heating the biomass in anaerobic conditions (total absence of oxygen), resulting in splitting of the original chemical bonds with the formation of simpler molecules. Using temperatures between 400 and 950°C, the biomass is converted into material in the liquid state (tar or pyrolysis oil) and/or gaseous state (syngas), plus a solid carbonaceous residue (char) which can be used as fertiliser or fuel. Syngas can be used in gas turbines to produce electricity, and tar can be used to power diesel engines.

This type of plant is also designed to treat large quantities of biomass and involves very high costs which certainly cannot be sustained by a single farmer.

In the published Italian patent application BG2012A000031 a plant is described for producing thermal energy from biomass. The plant uses a process of pyrolysis with oxygen in excess, and can be sized also to treat reduced quantities of biomass, such as those produced by a single farm, with production, installation and running costs within its reach. This plant also makes it possible and expedient, via the addition of conventional equipment, for the individual user to produce electricity, implementing what is known as microgeneration.

The plant described in BG2012A000031 comprises:
- a cylindrical loading tank with circular crown-shaped base and formed of a perforated metal sheet with holes uniformly distributed having a diameter of between 5 and 15 mm, the tank being motorised in order to rotate around its own vertical axis, the biomass being fed to the tank from above in the area of a fixed inlet;
- means for chopping the parts of biomass introduced into the tank having dimensions that do not allow them to pass through the holes of the above-mentioned perforated metal sheet;
- fixed deflector-aerator means for mixing the biomass lying on the above-mentioned perforated metal sheet;
- means for compacting the biomass against the above-mentioned perforated metal sheet, arranged in a fixed position downstream of the deflector-aerator means but upstream of the tank biomass inlet to facilitate the passage of the biomass through the holes of the above-mentioned perforated metal sheet;
- a cylindrical drying chamber below the tank having the same plan dimensions, at least the base of the drying chamber being fixed and having an opening arranged, in plan view, just upstream of the above-mentioned inlet;
- feed means for feeding forward along the drying chamber, towards the above-mentioned opening, the biomass which has passed through the above-mentioned perforated metal sheet;
- pulveriser means below the above-mentioned opening to chop the dried biomass which drops into said opening;
- a combustion chamber into which the biomass chopped by the pulveriser means falls and in which combustion of the same takes place;
- a first heat exchanger which uses part of the heat produced in the combustion chamber to heat up to at least 450°C an airflow taken from the outside and introduced into the base of the drying chamber in a position just downstream of the deflector-aerator means present in the tank, to produce the pyrolysis with oxygen in excess of the biomass with which the above-mentioned heated airflow comes into contact in the drying chamber;
- means for collecting the syngas which forms in the drying chamber following heating of the biomass due to introduction into the drying chamber of the above-mentioned heated airflow, and for introducing the captured syngas into the combustion chamber;
- means for collecting the hydrocarbon-rich vapours rising from the tank and introducing them into the combustion chamber;
- a second heat exchanger for recovering thermal energy from the fumes coming out of the combustion chamber.

At this point it should be remembered that pellets obtained from sawdust and wood chips by means of pellet making machines have been in use for many years to feed stoves and boilers for the production of thermal energy.

It has been found that with said pellet making machines, preferably of hydraulic type, it is possible to obtain pellets from any type of biomass, and that it is expedient to use the pellets obtained, on condition that they have a humidity no higher than 35%, to produce thermal energy in plants that utilise pyrolysis with oxygen in excess (like the one described in BG2012A000031). In fact, it has been ascertained that transformation of the biomass into pellets allows the plant to be fed with material having much more uniform characteristics resulting in much more regular plant operation.

One object of the present invention is to provide a plant of this type, fed with biomass in the form of pellets, which is even simpler and less costly, both to construct and to run, than the one in BG2012A000031.

US2003/0177963 describes a plant for the production of energy from biomass in the form of pellets. A further object is to provide a plant of the above-mentioned type which, by the addition of suitable equipment, allows the production of electricity (implementing the above-mentioned microgeneration) with high efficiency.

The above object cited first is achieved, and the relative technical problem solved, by means of the plant according to the attached claim 1.

Further characteristics of said plant are described in the dependent claims. In particular the above object cited second is achieved by a plant having the characteristics specified in claim 5.

The invention will be easier to understand from the following description of an embodiment example. Said description will refer to the accompanying drawings, in which:
fig. 1 is a perspective overview of a plant according to the present invention, in which the equipment adapted to produce electricity is already provided and shown very schematically;
fig. 2 is a perspective view of the same plant, but from a second point of view;
fig. 3 is a further perspective view thereof from a third point of view;
fig. 4 is an enlarged perspective view only of the drying chamber of the plant of fig. 1-3;
fig. 5 is a perspective view like the one in fig. 4, in which the upper half of the drying chamber has been removed to show how it is made inside;
fig. 6 is an exploded perspective view of the same drying chamber, which highlights its various parts;
fig. 7 is an enlarged perspective view of the combustion chamber, with relative accessory parts, of the plant of fig. 1-3;
fig. 8 is a section thereof in the area of a median plane of the combustion chamber, in the direction of the arrows 8-8 of fig. 7.

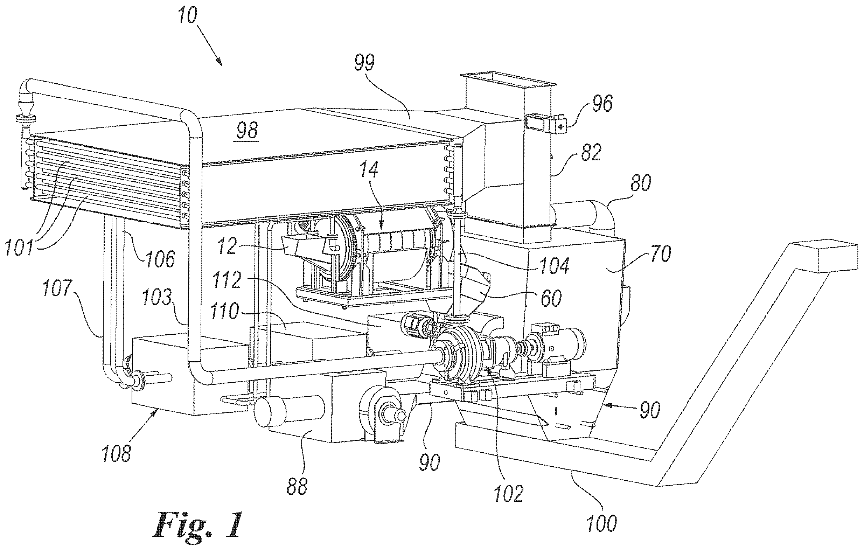

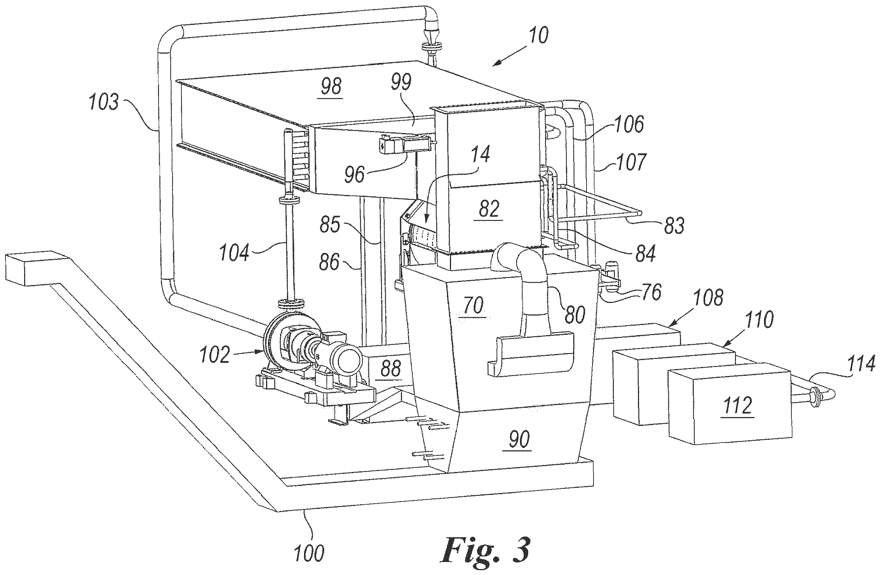

The plant illustrated schematically in fig. 1-3 and indicated as a whole by 10 allows the production of thermal energy from biomass fed to the plant in the form of pellets. In the particular case illustrated the plant 10 is also completed with equipment (which will be described later) allowing all or part of the thermal energy produced to be transformed into electricity.

It should be pointed out that, if desired, the plant 10 can be easily and conveniently provided with equipment (not shown for the sake of simplicity in the figures, also because said equipment is of conventional type and available on the market) adapted to transform any biomass (for example fowl dung or loppings) into pellets having a humidity no higher than 35%, thus allowing transformation of the biomass into thermal energy and/or electricity directly in the place where this biomass is produced. This allows elimination of the transport expenses of both the biomass and the pellets.

It should also be noted that to obtain the above pellets the same equipment can be used as that already used to obtain the normal pellets obtained from sawdust and wood chips and utilised to feed stoves and boilers to produce thermal energy.

In particular the plant 10 can be completed upstream by a conventional biomass loading tank into which the biomass, in a natural state, is introduced using a power shovel, for example. At the loading tank outlet, a conventional separator device is provided for separating any unsuitable solid parts (for example stones and ferrous elements) which may be contained in the biomass. The latter is then fed by means of a conveyor belt to a conventional crumbling-chopping device (for example the BIO 100 by CARAVAGGI of Pontoglio (BS)) which transforms the biomass into a material suitable for the formation of pellets; this material is fed by means of a conveyor belt to a pellet making machine (for example the MP50 by EOS of S. MARTINO B.A. (VR)) which transforms said material into pellets with humidity no higher than 35%, ready to be fed to the plant 10.

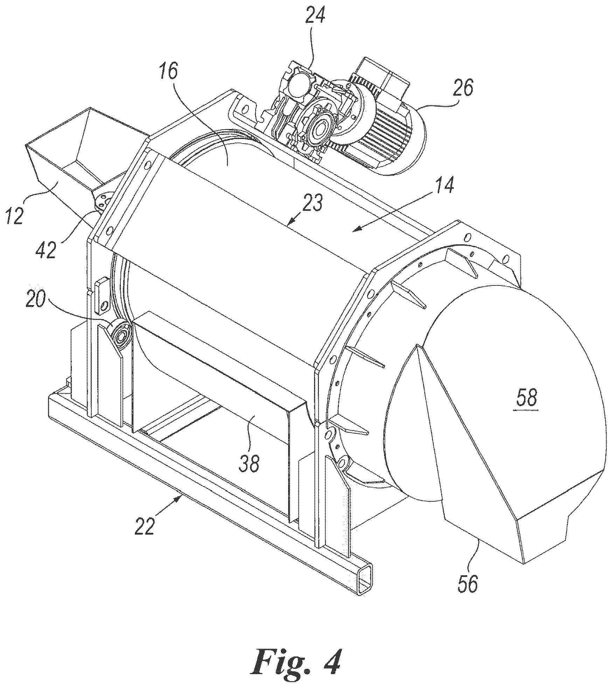

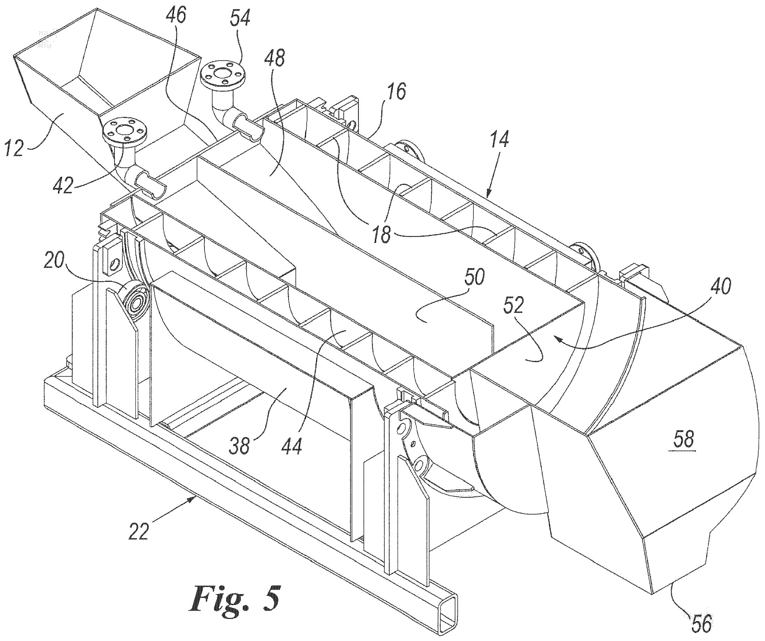

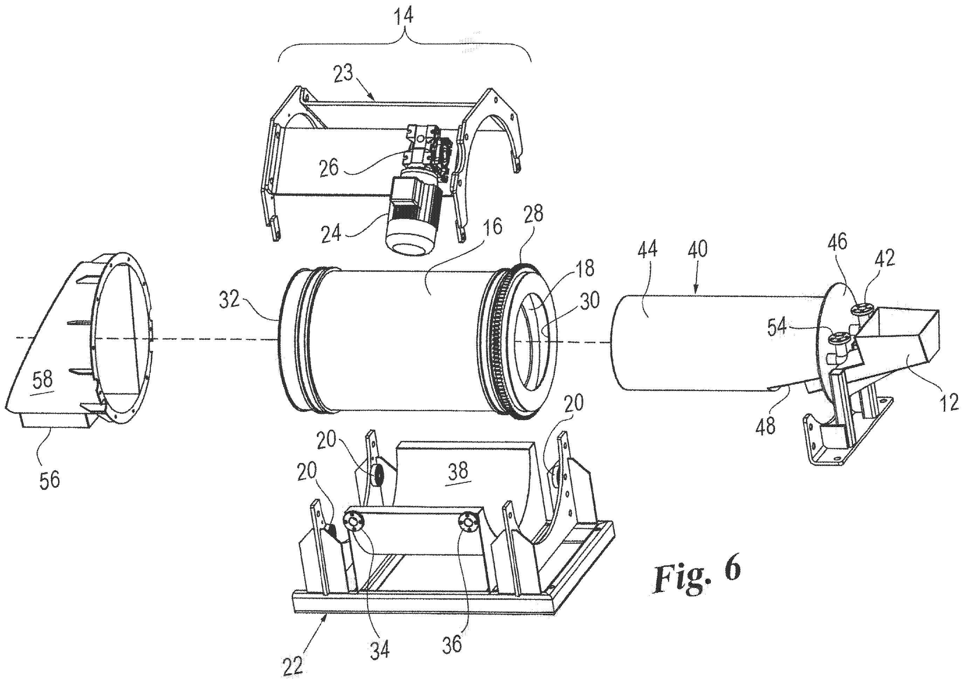

Fig. 1-3 show that the plant 10 comprises a hopper 12 (fig. 1) to which the pellets are fed (for example by means of a conveyor belt). The hopper 12 feeds by gravity a drying chamber 14, which can be seen in greater detail in fig. 4-6. The drying chamber 14 comprises an outer cylindrically shaped casing 16 with horizontal axis, on the inner surface of which coaxial helical means are fixed for mixing-feeding the pellets, in this specific case consisting of a helical element 18 (fig. 5 and 6) which extends substantially throughout the length of the drying chamber 14. The casing 16 rests on four idle rollers 20 (one of which can be seen in fig. 4 and 5, while in fig. 6 three can be seen) in turn borne by a structure 22. A frame 23, also borne by the structure 22, supports an electric motor 24 and relative transmission members 26 which cooperate with a circular rack 28, fixed coaxially to the cylindrical casing 16 in the vicinity of an end thereof. Therefore, operation of the electric motor 24 allows the casing 16 to be rotated about its own axis. The presence of the helical element 18 allows feeding along the casing 16 and simultaneous mixing of the pellets introduced, by means of the hopper 12, into the casing through its end opening 30 (fig. 6), until they reach its other open end 32.

Although the combustion chamber has not yet been described, we anticipate that part of the fumes produced by combustion of the pellets in said chamber are used to dry the pellets in the drying chamber 14. In particular a portion of the above-mentioned part of fumes is fed, by means of an inlet port 34 (fig. 6), to a first heating element 38 in the shape of a hollow saddle and arranged below the cylindrical casing 16. The heating element 38 is also provided with a port 36 for outlet of the fumes.

The other portion of the above-mentioned part of fumes is fed to a second heating element 40 through an inlet port 42. The heating element 40 consists substantially of a hollow cylindrical element 44 with diameter slightly smaller than the internal diameter of the helical element 18, such as to be accommodated coaxially inside the latter. A plate 46, to which the inlet port 42 is applied, closes one end of the cylindrical element 44, the latter having in the area of said end a lower tapered part 48, while the other end of the cylindrical element 44 is closed by a plate 52. The inside of the cylindrical element 44 is divided vertically into two parts by a longitudinal partition 50 (the lower part of which can be seen in fig. 5), which remains slightly spaced from the closing plate 52. Therefore the fumes that enter from the port 42 can travel through half of the inner space of the cylindrical element 44 and return in the other half until they exit from a second port 54 also applied to the plate 46.

As already mentioned, operation of the electric motor 24 causes rotation of the outer casing 16 and of the helical element 18 fixed to it, so that the pellets coming from the hopper 12 are fed forward and also mixed in the space between the outer cylindrical casing 16 and the inner cylindrical element 44 (which remains fixed), and simultaneously subject to drying thanks to the heat emitted from the above described first and second heating elements, 38 and 40 respectively, until they reach the opposite end of the drying chamber 14 and exit by gravity through the lower opening 56 of a connection element 58.

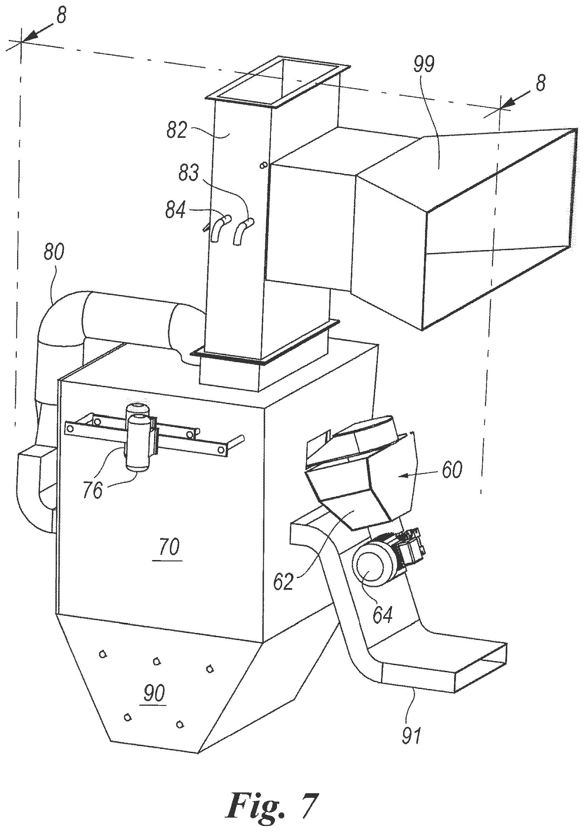

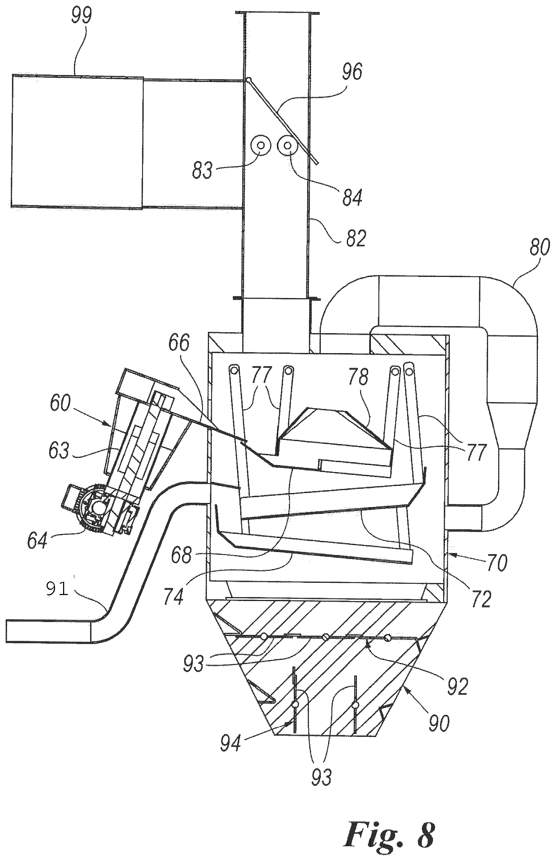

The drying chamber 14 allows pellets to be obtained with a humidity around 10%, which fall into a continuous metering device 60 which can be seen in greater detail in fig. 7 and 8. Said device is a conventional screw metering device which receives the dried pellets in its hopper 62 and, via rotation of the screw 63 driven by an electric motor 64, conveys a given quantity of pellets in a unit of time to the higher edge of an inclined plane 66; said quantity can be adjusted, within certain limits, by simply varying the rotation speed of the motor 64.

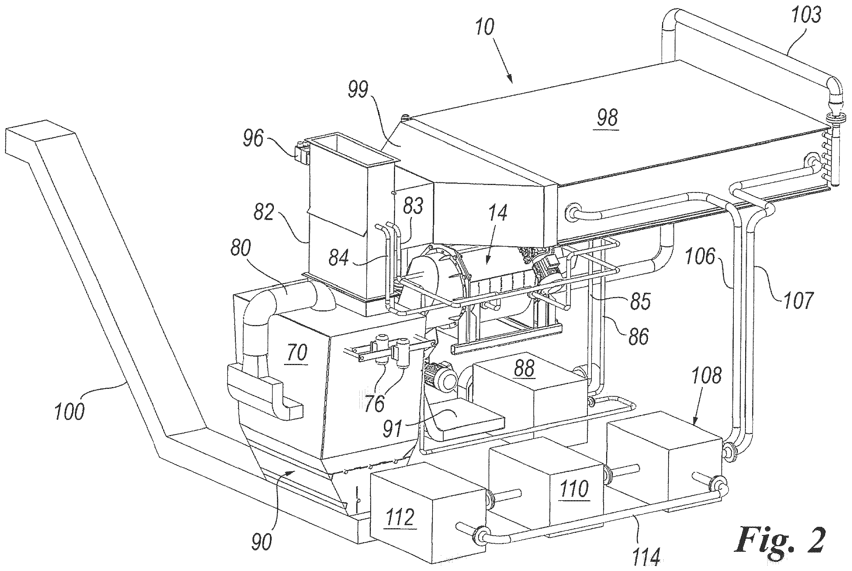

Due to the inclination of the plane 66, the pellets that have arrived on it fall by gravity into an inclined tray 68 positioned in the upper part of a combustion chamber 70. Below the tray 68, in the specific case illustrated, two combustion shelves or braziers 72 and 74 are positioned, arranged in cascade, on which combustion of the pellets takes place. The first brazier 72 has an inclination opposite to that of the tray 68 and is positioned so as to receive in cascade the pellets that drop by gravity from the latter. Analogously the second brazier 74 has an opposite inclination to that of the first brazier 72 and accommodates in cascade the pellets not yet completely combusted which fall from the first brazier 72. The braziers 72 and 74 are provided with through holes uniformly distributed and having dimensions that prevent the pellets from passing directly through them. The tray 68 and the braziers 72 and 74 have an inclination which is not in itself sufficient to cause the pellets in combustion to drop down by gravity. To obtain cascading of the pellets from the tray 68 to the first brazier 72 and then to the second one 74, conventional means are provided (shown schematically in fig. 2 and indicated by 76) which, by means of bars 77 (fig. 8), vibrate both the braziers 72 and 74 and the tray 68.

Note that the inclined tray 68 has the function of receiving and retaining for a given time the pellets that arrive from the inclined plane 66 so that the syngas can develop, hence it provides what will be called more generally means for receiving and retaining the pellets.

Combustion of the pellets on the braziers 72 and 74 generates fumes which heat the pellets present on the tray 68. The combustion chamber is designed so that the pellets on the tray 68 reach a temperature higher than 450°C for formation of the syngas. Just above the tray 68 an extraction hood 78 is provided which collects the syngas formed following heating of the pellets on the tray 68 to a temperature higher than 400°C. The extraction hood 78 provides what will be called means for collecting the syngas formed. It is connected to a duct 80 which allows the extracted syngas to be reintroduced into the combustion chamber in a position between the two braziers 72 and 74.

It should be noted that while in BG2012A000031 the syngas was formed in the drying chamber, in this plant it is more simply formed in the upper part of the combustion chamber, with consequent simplification of the plant.

The part of fumes used to dry the pellets in the drying chamber 14 and which is collected from the fume duct 82 by means of the ducts 83 and 84 (connected to the second (40) and first (38) heating element respectively of the drying chamber 14), having performed its function, is sent by means of respective pipes 85 and 86 to a conventional mixer 88 in which this part of fumes is mixed with an appropriate quantity of filtered air. The mixture obtained is introduced into the combustion chamber 70 by means of the pipe 91 substantially in the area of the brazier 72. The addition of air allows combustion of the pellets and the syngas to be obtained according to the above-mentioned process of pyrolysis with oxygen in excess.

A pipe can also be conveniently provided (not shown for the sake of simplicity in the figures) for collecting the fumes that form in the drying chamber 14 following drying of the pellets and conveying them to the mixer 88.

Following the combustion process, ashes form in the combustion chamber 70; at the end, said ashes fall into a compartment 90 below, where they are collected. In the compartment 90 means are provided for exhausting the ashes, so as to obtain complete combustion of the pellets in order to obtain the greatest quantity of heat possible from said pellets. In the specific case illustrated, said means comprise two assemblies 92 and 94 of butterfly elements 93 arranged on two respective levels and rotatable about their own horizontal axis. The butterfly elements of each of the two assemblies 92 and 94 are periodically rotated so as to pass from a closed position (that of assembly 92 in fig. 8), in which the butterfly elements 93 of one assembly form a horizontal screen which receives the ashes, to an open position (that of assembly 94 in fig. 8) in which the butterfly elements 93 are rotated by 90° and are arranged vertically, allowing the ash to fall below and collect on the bottom of the compartment 90. It should be noted that when one assembly is in the closed position, the other is in the open position and vice versa. The ashes accumulated on the bottom of the compartment 90 are periodically removed in a conventional manner, in particular by means of a conventional belt conveyor suitable for the purpose, shown schematically in fig. 1-3 and indicated by 100, and then disposed of.

It should be noted that, contrarily to the plant according to BG2012A000031, the present plant does not have in practice a starting transient. In a lateral wall of the combustion chamber 70 a hatch is provided (not shown for the sake of simplicity in the figures), through which an appropriate quantity of a conventional fire lighter, for example the common Diavolina (registered trademark), is placed on the braziers 72 and 74. By lighting the fire lighter just before the first pellets reach the combustion chamber, when they arrive in the tray 68 they begin to be heated and when they then fall onto the first brazier 72 their combustion begins; this contributes to bringing the temperature of the pellets, which in the meantime have reached the tray 68, to above 450°C, so that the syngas begins to form and the plant very rapidly begins operating at full capacity.

As already said, the fumes produced in the combustion chamber rise through the fume duct 82. In said duct, just above the points where the ducts 83 and 84 start (taking part of the fumes to the drying chamber 14) a motorised valve 96 (fig. 8) is provided, which diverts all (as in fig. 8) or part of the fumes that do not go into the ducts 82 and 83 towards a conventional diathermic oil exchanger 98, connected to the pipe 82 by means of the fitting 99. The fumes thus diverted run through the exchanger 98, leaving from its opposite end. Via a connecting pipe (not shown for the sake of simplicity in the figures), the fumes coming out of the exchanger 98 can be sent to the same chimney (not shown) as the one to which any fumes not diverted by the valve 96 are conveyed. The fumes that cross the exchanger 98 meet a plurality of pipes 101 in which the diathermic oil is circulated by means of a motorised pump 102 and relative connecting pipes 103 and 104. The diathermic oil is thus heated to a temperature above 200°C and circulated, via the pipes 106 and 107, in a conventional vaporizer 108 which allows the production of steam at an appropriate temperature and pressure to supply a conventional turbine device 110 (represented schematically in fig. 1-3) for the production of electricity, consisting substantially of a steam turbine coupled with an electricity generator.

In the specific case illustrated, downstream of the turbine device 110 a conventional recuperator 112 is provided, connected to the vaporizer 108 by means of the pipe 114 which allows recovery of part of the energy still contained in the steam turbine exhaust steam.

In the fume channel 82, a lambda sensor is expediently provided connected to a unit (not shown for the sake of simplicity in the figures) for controlling the plant 10 (in particular a microprocessor unit). The lambda sensor checks that the exhaust fumes comply with the current fume regulations. If not, the control unit intervenes, varying the plant operating parameters to ensure compliance with the regulations.

By way of example, if a biomass like fowl dung is transformed into pellets for use in the plant 10, said pellets having a calorific value of around 6250 Kal/kg, it is possible to produce electricity using a 50 kW turbine device (for example the device by the firm Technopa GmbH of Vienna, Austria, identified by the code S2E50). The plant 10 allows transformation of 60 kg/h of the above-mentioned pellets - dried in the drying chamber 14, sized so as to obtain pellets with approximately 10% humidity, and then fed to the combustion chamber 70 - into 1185 kg/h of saturated steam at 8 bars produced by the vaporizer 108, said steam being then fed to the turbine device 110.

If, like the plant 10, the plant also comprises the recuperator 112, which receives the exhaust steam of the above-mentioned turbine device 110 and condenses it, sending it back to the vaporizer 108, it is possible to reduce the quantity of pellets fed to the plant 10 to 45 kg/h, with the same amount of electricity produced by the turbine device 110.

The same plant, without the recuperator 112, can be provided with a 100kW turbine device 110 (for example by the aforementioned Technopa GmbH, identified by the code S2E 100) supplied with 1694kg/h of steam at 15 bar, obtained via the vaporizer 108, using 75 kg/h of the above-mentioned pellets. If the recuperator 112 is provided, the quantity of pellets to be fed to the plant is reduced to 55 kg/h, producing the same amount of electricity.

To conclude, it is important to note that the plant according to the present invention is simpler and less costly, both to build and run, than the plant according to BG2012A000031, and that the plant described above with reference to the figure is particularly suitable for producing electricity with a very high efficiency.

## Claims

1. Plant (10) for the production of thermal energy from biomass fed
to the plant (10) in the form of pellets with humidity no higher than 35%, comprising:
- a drying chamber (14) for the pellets;
- a combustion chamber (70) fed from above with the dried pellets and provided with at least two combustion shelves or braziers (72,74), one above the other, having opposite inclination and adapted to receive the pellets in cascade, the braziers (72, 74) being provided with uniformly distributed through holes having dimensions that prevent the pellets from passing directly through them, means (76) also being provided adapted to vibrate the braziers (72, 74) so as to facilitate cascading of the pellets from one brazier (72) to the other (74) until they drop, as ashes, into an ash collecting compartment (90);
- means for collecting part of the fumes produced in the combustion chamber (70) and sending them to the drying chamber (14) for drying the pellets which pass through the latter (14);
- a heat exchanger (98) for recovering thermal energy from the fumes produced in the combustion chamber (70) and en route to the chimney;
**characterised in that**:
- the drying chamber (14) has a cylindrical casing (16) with substantially horizontal axis, an opening (32) being provided in the area of one of the two bases of said casing (16) to feed the pellets to be dried to the chamber (14), the cylindrical casing (16) being motorised so that it can rotate about its own axis, coaxial helical means (18) being fixed to the inner wall of said casing (16) for mixing-feeding the pellets, the cylindrical casing (16) being also provided with an outlet (30) for the pellets in the area of its other base ;
- a metering device (60) is provided for feeding the combustion chamber (70), said device being in turn fed with the pellets coming from the drying chamber (14);
- in the upper part of the combustion chamber (70) means (68) are provided for receiving the pellets fed by the metering device (60) and retaining them for a sufficient time to cause the formation of syngas following heating of said pellets caused by the combustion which takes place in the combustion chamber (70), and means (78) for collecting the syngas formed;
- means (85, 86) are provided for collecting the fumes and the exhalations present in the drying chamber (14) and conveying them to a mixer (88) where they are mixed with an appropriate quantity of air;
- means (91) are provided for feeding the mixture obtained in the mixer (88) to the combustion chamber (70) in the area of the braziers (72, 74) so that the process of pyrolysis with oxygen in excess occurs;
- means (80) are provided for feeding to the combustion chamber (70), in the area of the braziers (72, 74), the syngas collected by the syngas collection means (78).

2. Plant (10) according to claim 1, wherein the drying chamber (14) comprises a first (38) and a second (40) heating element, each crossed by a portion of the part of fumes produced in the combustion chamber (70) and sent to the drying chamber (14), the first heating element (38) being arranged below the cylindrical casing (16) and having the shape of a saddle to adapt to the latter (16), while the second heating element (40) comprises a cylindrical element (44) with diameter slightly smaller than the internal diameter of the helical means (18) and arranged coaxially inside the latter, the hollow interior of the cylindrical element (44) being divided longitudinally by a coaxial partition (50), one end of which remains slightly spaced from the relative closed end (52) of the cylindrical element (44) to allow the outward and return circulation of the relative portion of fumes.

3. Plant (10) according to claim 1, wherein the means for receiving and retaining the pellets comprise an inclined tray (68) arranged in the upper part of the combustion chamber (70).

4. Plant (10) according to claim 1, wherein the means for collecting the syngas comprise an extraction hood (78) which is positioned above the means (68) for receiving and retaining the pellets.

5. Plant (10) according to claim 1, comprising a vaporizer (108) and a steam turbine (110) coupled with an electricity generator, wherein the heat exchanger (98) is of the diathermic oil type, the diathermic oil thus heated being suitable to be used to produce in the vaporizer (108) steam under pressure with which to supply the turbine device (110) for the production of electricity.

6. Plant (10) according to claim 5, wherein downstream of the turbine device (110) a recuperator (112) is provided, which also supplies the vaporizer (108), in order to recover part of the energy still contained in the condensate/exhaust steam of the turbine device (110).

7. Plant (10) according to claim 1, wherein in the ash collecting compartment (90) means (92, 94) are provided for exhausting the same.

8. Plant (10) according to claim 7, wherein the means (92, 94) for exhausting the ashes comprise two assemblies (92, 94) of butterfly elements (93) arranged on two respective levels, the butterfly elements (93) being rotatable about their own horizontal axis, the butterfly elements (93) of each of the two assemblies (92, 94) being rotatable to pass from a closed position in which the butterfly elements (93) of one assembly form a horizontal screen which receives the ashes, to an open position in which the butterfly elements (93) are rotated by 90° to a vertical arrangement, thus allowing the ash to drop below.

9. Plant (10) according to claim 7, wherein the metering device (60) is of the screw type.

## Patentansprüche

1. Eine Anlage (10) zur Erzeugung von Wärmeenergie aus Biomasse, mit der die Anlage (10) in Form von Pellets mit einer Feuchtigkeit von nicht über 35% gespeist wird, welche jeweils Folgendes umfasst:
- eine Trockenkammer (14) für die Pellets;
- eine Brennkammer (70), welche von oben mit den getrockneten Pellets gespeist wird und mit mindestens zwei Brenngestellen oder Rosten (72, 74) ausgerüstet ist, und zwar eins über dem anderen, wobei diese jeweils in entgegengesetzte Richtung geneigt und geeignet sind, die Pellets kaskadenförmig aufzunehmen, und die Roste (72, 74) mit gleichmäßig verteilten durchgehenden Öffnungen versehen sind, welche Ausmaße aufweisen, die verhindern, dass die Pellets direkt hindurch fallen, wobei ebenfalls Elemente (76) vorgesehen sind, die geeignet sind, diese Roste (72, 74) vibrieren zu lassen, so dass das Kaskadieren der Pellets von einem Rost (72) zum anderen (74) vereinfacht wird, bis sie als Aschen in ein Aschesammelfach (90) fallen;
- Elemente zum Auffangen eines Teils des Rauchs, welcher in der Brennkammer (70) erzeugt wird und dessen Sendung zur Trockenkammer (14) zur entsprechenden Trocknung der Pellets, die durch Letztere (14) hindurch laufen;
- einen Wärmeaustauscher (98) zur Wiedergewinnung der Wärmeenergie aus dem Rauch, welcher in der Brennkammer (70) erzeugt wird und auf dem Weg zum Kamin ist;
**dadurch gekennzeichnet, dass**
- die Trockenkammer (14) ein zylindrisches Gehäuse (16) mit einer im Wesentlichen horizontalen Achse aufweist, wobei eine Öffnung (32) vorgesehen ist, die im Bereich eines der beiden Böden des genannten Gehäuses (16) vorgesehen ist, um die zu trocknenden Pellets in die Kammer (14) zu leiten, wobei das zylindrische Gehäuse (16) jeweils motorisiert ist, so dass es sich um seine eigene Achse drehen kann, und koaxiale schraubenförmige Elemente (18) an der inneren Wand des genannten Gehäuses (16) zur Mischung/Einspeisung der Pellets befestigt sind, wobei das zylindrische Gehäuse (16) ebenfalls mit einem Auslass (30) für die Pellets im Bereich seines anderen Bodens ausgerüstet ist;
- eine Dosierungsvorrichtung (60) zur Speisung der Brennkammer (70) vorgesehen ist, wobei die genannte Vorrichtung jeweils der Reihe nach mit den Pellets gespeist wird, welche von der Trockenkammer (14) kommen;
- im oberen Bereich der Brennkammer (70), Elemente (68) zur Aufnahme der Pellets vorgesehen sind, welche durch die Dosierungsvorrichtung (60) eingespeist werden, und zu deren Rückhaltung für einen ausreichenden Zeitraum, um die Bildung von Synthesegas zu verursachen, das auf die Erhitzung der genannten Pellets infolge der Verbrennung entsteht, die in der Brennkammer (70) stattfindet, sowie Elemente (78) zum Auffangen des gebildeten Synthesegases;
- Elemente (85, 86) zum Auffangen des Rauchs und der in der Trockenkammer (14) vorhandenen Exhalationen und zu deren Beförderung zu einer Mischanlage (88) vorgesehen sind, in der sie mit einer entsprechenden Menge Luft gemischt werden;
- Elemente (91) zur Einspeisung der so erzielten Mischung in die Mischanlage (88) in die Brennkammer (70) im Bereich der Roste (72, 74) vorgesehen sind, so dass das Verfahren der Pyrolyse mit überschüssigem Sauerstoff stattfindet;
- Elemente (80) zur Einspeisung des Synthesegases, das durch die entsprechenden Synthesegas-Auffangelemente (78) aufgefangen wird, in die Brennkammer (70) im Bereich der Roste (72, 74) vorgesehen sind.

2. Eine Anlage (10) gemäß Anspruch 1, wobei die Trockenkammer (14) jeweils ein erstes (38) und ein zweites (40) Heizelement umfasst, welche jeweils von einem Teil des in der Brennkammer (70) erzeugten und zu der Trockenkammer (14) geschickten Rauchs durchquert werden, wobei das erste Heizelement (38) unter dem zylindrischen Gehäuse (16) angeordnet ist und die Form eines Sattels aufweist, um sich Letzterem (16) anzupassen, während das zweite Heizelement (40) ein zylindrisches Element (44) mit einem geringfügig kleineren Durchmesser als der innere Durchmesser des schraubenförmigen Elements (18) umfasst und koaxial in diesem letzteren angeordnet ist, wobei das hohle Innere des zylindrischen Elements (44) längs durch eine koaxiale Trennwand (50) geteilt wird, deren eines Ende geringfügig von dem entsprechenden geschlossenen Ende (52) des zylindrischen Elements (44) entfernt ist, um die äußere und Rückzirkulation des entsprechenden Rauchanteils zu gestatten.

3. Eine Anlage (10) gemäß Anspruch 1, wobei die Elemente zum Aufnehmen und Zurückhalten der Pellets eine geneigte Schale (68) aufweisen, welche im oberen Bereich der Brennkammer (70) angeordnet ist.

4. Eine Anlage (10) gemäß Anspruch 1, wobei die Elemente zum Auffangen des Synthesegases einen Extraktionsaufsatz (78) umfassen, welcher oberhalb der entsprechenden Elemente (68) zur Aufnahme und Zurückhaltung der Pellets angeordnet ist.

5. Eine Anlage (10) gemäß Anspruch 1, welche jeweils einen Verdampfer (108) und eine Dampfturbine (110) umfasst, die mit einem entsprechenden Stromgenerator verbunden ist, wobei es sich bei der Wärmeaustauscher (98) um ein diathermischen Öl handelt, wobei das so erhitzte diathermische Öl dazu geeignet ist, gebraucht zu werden, um im Verdampfer (108) Dampf unter Druck zu erzeugen, mit dem die Turbinenvorrichtung (110) zur Erzeugung von Elektrizität beliefert wird.

6. Eine Anlage (10) gemäß Anspruch 5, wobei jeweils stromabwärts der Turbinenvorrichtung (110) ein Rekuperator (112) vorgesehen ist, welcher ebenfalls den Verdampfer (108) beliefert, um einen Teil der Energie, die noch in dem Kondensat/Abdampf der Turbinenvorrichtung (110) enthalten ist.

7. Eine Anlage (10) gemäß Anspruch 1, wobei in dem Aschensammelfach (90) jeweils Elemente (92, 94) zu deren Absaugung vorgesehen sind.

8. Eine Anlage (10) gemäß Anspruch 7, wobei die Elemente (92, 94) zur Absaugung der Aschen zwei Baugruppen (92, 94) aus Drosselelemente (93) umfassen, welche jeweils auf zwei entsprechenden Höhen angeordnet sind, wobei die Drosselelemente (93) um ihre eigene horizontale Achse drehbar sind, die Drosselelemente (93) jeder der beiden Baugruppen (92, 94) drehbar sind, um von einer geschlossenen Stellung, in der die Drosselelemente (93) einer Baugruppe eine waagerechte Abschirmung bilden, die die Aschen aufnimmt, zu einer offenen Stellung überzugehen, in der die Drosselelemente (93) um 90° in eine senkrechte Anordnung gedreht werden, wodurch das Herunterfallen der Aschen gestattet wird.

9. Eine Anlage (10) gemäß Anspruch 7, wobei es sich bei der Dosierungsvorrichtung (60) um eine Schraubvorrichtung handelt.

## Revendications

1. Installation (10) pour la production d'énergie électrique à partir de la biomasse alimentée dans l'installation (10) sous la forme de granulés avec une humidité non supérieure à 35%, comprenant :
- une chambre de séchage (14) pour les granulés ;
- une chambre de combustion (70) alimentée par le haut avec des granulés séchés et munie d'au moins deux étages de combustion ou brasiers (72, 74), l'un au-dessus de l'autre, ayant une inclinaison opposée et étant adaptés pour recevoir les granulés en cascade, les brasiers (72, 74) étant pourvus de trous passants distribués uniformément ayant des dimensions qui empêchent les granulés de passer directement à travers ceux-ci, des moyens (76) étant également prévus, adaptés pour faire vibrer les brasiers (72, 74) de manière à faciliter l'effet de cascade des granulés d'un brasier (72) à l'autre (74) jusqu'à ce qu'ils chutent, comme des cendres, dans un compartiment de collecte de cendres (90) ;
- des moyens de collecte d'une partie des fumées produites dans la chambre de combustion (70) et leur acheminement à la chambre de séchage (14) pour sécher les granulés qui passent à travers celle-ci (14) ;
- un échangeur de chaleur (98) pour récupérer une énergie thermique à partir des fumées produites dans la chambre de combustion (70) et acheminées vers la cheminée ;
**caractérisée en ce que**
- la chambre de séchage (14) a une enveloppe cylindrique (16) avec un axe sensiblement horizontal, une ouverture (32) étant prévue dans la zone d'une des deux bases de ladite enveloppe (16) pour alimenter la chambre (14) en granulés à sécher, l'enveloppe cylindrique (16) étant motorisée de manière qu'elle puisse tourner autour de son propre axe, des moyens hélicoïdaux coaxiaux (18) étant fixés à la paroi intérieure de ladite enveloppe (16) pour mélanger-acheminer les granulés, l'enveloppe cylindrique (16) étant également pourvue d'une sortie (30) pour les granulés dans la zone de son autre base ;
- un dispositif de dosage (60) est prévu pour alimenter la chambre de combustion (70), ledit dispositif étant alimenté à son tour avec des granulés provenant de la chambre de séchage (14) ;
- dans la partie supérieure de la chambre de combustion (70) sont disposés des moyens (68) pour recevoir les granulés alimentés par le dispositif de dosage (60) et les retenir pendant un temps suffisant pour provoquer la formation d'un gaz de synthèse à la suite du chauffage desdits granulés provoqué par la combustion qui a lieu dans la chambre de combustion (70), et des moyens (78) pour collecter le gaz de synthèse formé ;
- des moyens (85, 86) sont prévus pour recueillir les fumées et les exhalations présentes dans la chambre de séchage (14) et les acheminer vers un mélangeur (88) où elles sont mélangées avec une quantité d'air appropriée ;
- des moyens (91) sont prévus pour acheminer le mélange obtenu dans le mélangeur (88) à la chambre de combustion (70) dans la zone des brasiers (72, 74) de manière que le processus de pyrolyse avec de l'oxygène en excès se produise ;
- des moyens (80) sont prévus pour acheminer dans la chambre de combustion (70), dans la zone des brasiers (72, 74), le gaz de synthèse recueilli par les moyens de collecte de gaz de synthèse (78).

2. Installation (10) selon la revendication 1, dans laquelle la chambre de séchage (14) comprend un premier (38) et un deuxième (40) élément chauffant, chacun traversé par une portion de la partie de fumées produites dans la chambre de combustion (70) et envoyées à la chambre de séchage (14), le premier élément chauffant (38) étant agencé au-dessous de l'enveloppe cylindrique (16) et ayant la forme d'une selle pour s'adapter à cette dernière (16), alors que le deuxième élément chauffant (40) comprend un élément cylindrique (44) avec un diamètre légèrement inférieur au diamètre interne des moyens hélicoïdaux (18) et agencé de manière coaxiale à l'intérieure de ces derniers, l'intérieur creux de l'élément cylindrique (44) étant divisé longitudinalement par une portion coaxiale (50), dont une extrémité reste légèrement espacée de l'extrémité fermée relative (52) de l'élément cylindrique (44) pour permettre la circulation vers l'extérieur et de retour de la portion correspondante de fumées.

3. Installation (10) selon la revendication 1, dans laquelle les moyens pour recevoir et retenir les granulés comprennent un plateau incliné (68) agencé dans la partie supérieure de la chambre de combustion (70).

4. Installation (10) selon la revendication 1, dans laquelle les moyens de collecte du gaz de synthèse comprennent une hotte d'extraction (78) qui est positionnée au-dessus des moyens (68) pour recevoir et retenir les granulés.

5. Installation (10) selon la revendication 1, comprenant un vaporisateur (108) et une turbine à vapeur (110) couplée à un générateur électrique, dans lequel l'échangeur de chaleur (98) est du type à huile diathermique, l'huile diathermique ainsi chauffée étant adaptée pour être utilisée pour produire dans le vaporisateur (108) de la vapeur sous pression avec laquelle alimenter le dispositif à turbine (110) pour la production d'électricité.

6. Installation (10) selon la revendication 5, dans laquelle un récupérateur (112) est disposé en aval du dispositif à turbine (110), lequel aliment également le vaporisateur (108), de manière à récupérer une partie de l'énergie encore contenue dans le condensat/la vapeur d'échappement du dispositif à turbine (110).

7. Installation (10) selon la revendication 1, dans laquelle, dans le compartiment de collecte de cendres (90) sont disposés des moyens (92, 94) pour évacuer celles-ci.

8. Installation (10) selon la revendication 7, dans laquelle les moyens (92, 94) pour évacuer les cendres comprennent deux ensembles (92, 94) d'éléments de type papillon (93) agencés sur deux niveaux respectifs, les éléments de type papillon (93) pouvant pivoter autour de leur propre axe horizontal, les éléments de type papillon (93) de chacun des deux ensembles (92, 94) pouvant pivoter pour passer d'une position fermée dans laquelle les éléments de type papillon (93) d'un ensemble forment un tamis horizontal qui reçoit les cendres à une position ouverte dans laquelle les éléments de type papillon (93) sont pivotés de 90° dans une disposition verticale, en permettant ainsi à la cendre de tomber dessous.

9. Installation (10) selon la revendication 7, dans laquelle le dispositif de dosage (60) est du type à vis.
